(19) Europäisches Patentamt
European Patent Office
Office européen des brevets

(11) **EP 2 149 214 B1**

(12) **FASCICULE DE BREVET EUROPEEN**

(45) Date de publication et mention
de la délivrance du brevet:
**02.07.2014 Bulletin 2014/27**

(51) Int Cl.:
***H04J 3/06*** (2006.01)

(21) Numéro de dépôt: **08805818.5**

(22) Date de dépôt: **20.05.2008**

(86) Numéro de dépôt international:
**PCT/FR2008/050872**

(87) Numéro de publication internationale:
**WO 2008/149028 (11.12.2008 Gazette 2008/50)**

(54) **SYNCHRONISATION EN PHASE DE NOEUDS DANS UN RESEAU DE TELECOMMUNICATIONS**

PHASENSYNCHRONISIERUNG VON KNOTEN IN EINEM NACHRICHTENÜBERTRAGUNGSNETZ

PHASE SYNCHRONIZATION OF NODES IN A TELECOMMUNICATION NETWORK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **22.05.2007 FR 0755203**

(43) Date de publication de la demande:
**03.02.2010 Bulletin 2010/05**

(73) Titulaire: **Orange**
**75015 Paris (FR)**

(72) Inventeurs:
• **JOBERT, Sebastien**
**F-22140 Begard (FR)**
• **DELETRE, Fabrice**
**F-22300 Lannion (FR)**
• **MORLON, Yves**
**F-22300 Lannion (FR)**

(74) Mandataire: **Regimbeau**
**20, rue de Chazelles**
**75847 Paris Cedex 17 (FR)**

(56) Documents cités:
WO-A-01/88746          US-A- 5 559 796
US-A1- 2002 018 475    US-A1- 2003 235 216

• **"B-ISDN ATM Adaptation Layer specification: Type 1 AAL; I.363.1 (08/96); B-ISDN ATM Adaptation Layer specification : Type 1 AAL" ITU-T STANDARD IN FORCE (I), INTERNATIONAL TELECOMMUNICATION UNION, GENEVA,, CH, no. I3631 8/96, 1 août 1996 (1996-08-01), XP017401668**

**Description**

La présente invention concerne un procédé de synchronisation en phase de noeuds dans un réseau de télécommunications de manière à imposer une phase commune à des noeuds.

Certaines applications, en particulier dans un réseau de télécommunications cellulaire du type UMTS ("Universal Mobile Telecommunications System" en anglais), ou dans un réseau de diffusion vidéo numérique du type terrestre DVB-T (Digital Video Broadcast Terrestrial" en anglais) ou pour réception sur mobiles DVB-H ("Digital Video Broadcasting-Handheld" en anglais), ou dans un réseau de télécommunications à accès WIMAX ("World wide Interoperability Microwave Access" en anglais), ont besoin d'une synchronisation en phase, avec une exactitude de l'ordre de la microseconde, ce qui constitue une contrainte relativement importante. En d'autres termes, des équipements dans des noeuds voisins d'un réseau nécessitent une référence de phase commune, avec une erreur maximale de l'ordre de la microseconde. La synchronisation en phase est justifiée pour de multiples raisons telles que le multiplexage temporel, une réduction du temps de transfert intercellulaire ("handover" en anglais), une réduction des interférences entre des équipements de réseau, une optimisation des performances de l'interface radio et une économie de puissance de batterie dans les mobiles.

Traditionnellement, les réseaux de télécommunications assurent une synchronisation en fréquence qui apporte aux équipements le nécessitant un rythme de référence sans être a priori en phase.

Il est cependant possible d'utiliser une synchronisation en temps pour synchroniser en phase des équipements mais avec une précision faible de l'ordre de la milliseconde. Par exemple le protocole de synchronisation en temps NTP ("Network Time Protocol" en anglais) sert à synchroniser des horloges d'ordinateurs entre un client et un serveur sur la base d'un moyennage d'intervalles temporels entre les instants de réception de paquets estampillés prédéterminés et des estampilles temporelles extraites de ces paquets transmis du serveur au client. Selon un autre exemple, le protocole IEEE 1588 préconise de transmettre des paquets de synchronisation et de suivi ("follow-up" en anglais) incluant des données d'horodatage depuis une horloge maître vers une horloge esclave pour que celle-ci se synchronise sur l'horloge maître.

Pour parvenir à une synchronisation en phase avec une exactitude à la microseconde près, des opérateurs de télécommunications ont déployés des récepteurs de système de positionnement GPS ("Global Positioning System" en anglais) pour les relier à des équipements d'un réseau de télécommunications. Le récepteur est capable de fournir une impulsion par seconde à l'équipement, et chaque signal délivré par l'équipement est en phase à la microseconde près.

Cependant les récepteurs GPS sont coûteux et n'utilisent pas l'infrastructure existante du réseau de télécommunications ce qui ne permet pas un couplage à l'architecture de distribution de synchronisation en fréquence.

Le document ITU recommendation I.363.1, qui est considéré comme étant 'état de la technique le plus proche de l'objet de la revendication 1 décrit la transmission d'une information de phase, titré "SRTS", sensiblement en phase avec une référence de phase interne au premier noeud. Le deuxième noeud utilise cette information de phase afin d'établir une horloge synchronisée avec l'horloge du premier noeud. Ce document divulgue un signalement de position ("pointer") de l'information par rapport à des éléments composants d'un signal de données transporté par le lien entre les deux noeuds.

Selon ITU I.363.1, ce signalement ne fait pas rapport à l'information de phase comme "SRTS". Au contraire, cette information SRTS est inclue dans une position invariable de l'entête ("header").

Le document US2003/0235216 (Gustin et al.; 25 décembre 2003) propose une dispositif d'horodatage aussi proche que possible à la couche physique.

Le document US2002/0018475 (Ofek et al.; 14 février 2002) divulgue un procédé de transmission entre deux noeuds d'un réseau de télécommunication et divulgue également un transfert d'une information d'horloge ("clocking information") dans une position arbitraire par rapport à des éléments composants.

Pour pallier les inconvénients évoqués ci-dessus, un procédé pour synchroniser en phase des noeuds reliés par des liens d'un réseau de télécommunications, est caractérisé en ce qu'il comprend depuis un premier noeud vers un deuxième noeud, un transfert d'une information de phase sensiblement en phase avec une référence de phase interne au premier noeud et d'un signalement de position de l'information de phase par rapport à des éléments composants d'un signal de données transporté par un lien du réseau reliant le premier noeud au deuxième noeud.

Le transfert d'une information de phase se fait de noeud en noeud de proche en proche, lien par lien, suivant un réseau de distribution arborescent de la synchronisation en phase. L'invention propose ainsi une solution alternative aux récepteurs GPS en recourant aux liens de transmission d'un réseau de télécommunications pour fournir une synchronisation en phase de qualité à des applications ou des équipements dans des noeuds.

Par rapport à des solutions de synchronisation en temps protocolaires de type NTP, le procédé de l'invention a l'avantage de ne pas être influencé par le trafic dans le réseau et de consommer beaucoup moins de bande passante.

Le transfert d'information de phase peut comprendre dans le premier noeud une génération de l'information de phase sensiblement en phase avec la référence de phase interne au premier noeud, une génération du signalement de la position de l'information de phase générée par rapport aux éléments composants dans le signal de données, et une transmission du signal de données avec l'information de phase générée et le signalement de position généré au deuxième noeud, et dans le deuxième noeud une détection du signalement de position généré et de l'information de phase générée dans le signal de données, et une synchronisation en phase d'une référence de phase interne au deuxième noeud avec l'information de phase générée en dépendance du signalement généré de la position de l'information de phase générée.

Le signalement de position généré est adapté aux caractéristiques des données transmises dans le lien. Le signalement de position peut être un nombre d'élément composant entre l'information de phase générée et un bit ayant un rang prédéterminé dans un paquet prédéterminé incluant ledit nombre, le bit de rang prédéterminé précédant ou succédant à l'information de phase générée, ou bien un mot de code de gestion qui est généré avec un déphasage prédéterminé par rapport à la référence de phase interne au premier noeud et dans lequel l'information de phase générée est positionnée à un rang prédéterminé, ou bien encore une modulation spécifique dans l'information de phase générée.

Afin de plus préciser la position de l'information de phase par rapport aux éléments composants du signal de données et d'émettre l'information de phase tel qu'un bit de phase plus finement que la granularité du signal de données dans les liens, le signalement de position généré et transféré peut être complété par une information résiduelle spécifiant un écart temporel entre l'information de phase générée et un instant de la référence de phase interne au premier noeud, l'écart temporel étant inférieur à une période des éléments composants du signal de données. Selon une autre réalisation, au lieu de spécifier une information résiduelle, le premier noeud mémorise un écart temporel résiduel cumulé entre l'information de phase générée et la référence de phase interne au premier noeud, et procède à un décalage temporel de l'information de phase générée d'un élément composant dans le signal de données lorsque l'écart temporel résiduel cumulé mémorisé excède une période des éléments composants du signal de données.

Pour mettre en phase précisément des noeuds de proche en proche dans le réseau, l'invention prévoit en outre une compensation d'un délai de transfert de l'information de phase à travers le lien reliant le premier noeud au deuxième noeud. La compensation de délai de transfert évite avantageusement une accumulation du retard ou de l'avance de phase le long du réseau de distribution arborescent de la synchronisation en phase.

Plus particulièrement pour asservir dynamiquement le deuxième noeud sur le premier noeud, la compensation du délai de transfert peut comprendre les étapes itératives suivantes :

depuis le premier noeud au deuxième noeud, une transmission de l'information de phase dans le premier noeud avec un décalage temporel, avance ou retard, dépendant du délai de transfert par rapport à la référence de phase interne au premier noeud et du signalement de position de l'information de phase au deuxième noeud,
dans le deuxième noeud, une synchronisation d'une référence de phase interne au deuxième noeud avec la réception de l'information de phase transmise par le premier noeud et détectée en fonction du signalement de position,
une transmission depuis le deuxième noeud vers le premier noeud d'une information de phase sensiblement en phase avec la référence de phase synchronisée interne au deuxième noeud et d'un signalement de position de l'information de phase par rapport aux éléments composants d'un signal de données transporté par le lien reliant le premier noeud au deuxième noeud et
à la réception de l'information de phase dans le premier noeud, une mise à jour du décalage temporel par rapport à la référence de phase interne au premier noeud en fonction du décalage temporel précédent et d'un déphasage entre la référence de phase interne au premier noeud et l'information de phase transmise détectée en fonction du signalement de position transmis.

De manière à progressivement synchroniser en phase le deuxième noeud, la référence de phase du deuxième noeud peut être mise en phase progressivement par des décalages temporels de la transmission de l'information de phase générée dans le premier noeud dépendant de fractions du délai de transfert par rapport à la référence de phase interne au premier noeud.

De même, pour progressivement synchroniser la phase dans le deuxième noeud à la réception de la première information de phase transmise par le premier noeud, la référence de phase du deuxième noeud peut être mise en phase progressivement par une soustraction de l'instant de réception de l'information de phase transmise par le premier noeud à un instant proche d'une référence de phase initiale du deuxième noeud, une division de la différence obtenue par un coefficient supérieur à 1, et d'un déphasage de la référence de phase initiale du quotient de la division par rapport audit instant proche.

L'invention a aussi pour objet les premier et deuxième noeuds. Un noeud, en tant que premier noeud, apte à synchroniser en phase un autre noeud et relié à celui-ci par un lien dans un réseau de télécommunications, est caractérisé en ce qu'il comprend un moyen pour transférer vers l'autre noeud une information de phase sensiblement en phase avec une référence de phase interne au premier noeud et un signalement de position de l'information de phase par rapport à des éléments composants d'un signal de données transporté par le lien vers ledit autre noeud. Un noeud, en tant que deuxième noeud, apte à être synchronisé en phase avec un autre noeud et relié à celui-ci par un lien dans un réseau de télécommunications, est caractérisé en ce qu'il comprend un moyen pour synchroniser en phase une référence de phase avec la réception d'une information de phase sensiblement en phase avec une référence de phase transférée par ledit autre noeud et détectée en fonction d'un signalement de position transféré de l'information de phase par rapport à des éléments composants d'un signal de données transmis par ledit autre noeud sur le lien.

L'invention se rapporte aussi à des programmes d'ordinateur aptes à être mis en oeuvre respectivement dans un noeud apte à synchroniser en phase un autre noeud et un noeud apte à être synchronisé en phase par un autre noeud dans un réseau de télécommunications selon l'invention, pour mettre en oeuvre le procédé de l'invention, chacun desdits programmes comprenant des instructions qui, lorsque le programme est exécuté dans un processeur du noeud respectif, réalisent des étapes conformes au procédé de l'invention.

Enfin, l'invention se rapporte à un signal de données apte à être transporté par un lien entre deux noeuds d'un réseau de télécommunications à synchroniser en phase, caractérisé en ce qu'il comprend une information de phase sensiblement en phase avec une référence de phase interne à l'un des noeuds, et un signalement de position de l'information de phase par rapport à des éléments composants du signal de données.

D'autres caractéristiques et avantages de la présente invention apparaîtront plus clairement à la lecture de la description suivante de plusieurs réalisations de l'invention données à titre d'exemples non limitatifs, en référence aux dessins annexés correspondants dans lesquels :

- la figure 1 est un bloc-diagramme schématique d'un réseau de télécommunications incluant un réseau de distribution de synchronisation en phase selon l'invention ;
- la figure 2 est un bloc-diagramme relatif à un noeud de réseau selon l'invention ;
- la figure 3 est un algorithme du procédé de synchronisation en phase selon l'invention ;
- les figures 4, 5 et 6 sont des blocs-diagrammes d'un lien de transmission d'information de phase depuis un noeud maître vers un noeud esclave respectivement selon des première, deuxième et troisième réalisations de l'invention ;
- la figure 7 est un bloc-diagramme schématique du réseau de télécommunications de la figure 1 incluant également un réseau de distribution de synchronisation en fréquence ;
- la figure 8 est un diagramme temporel d'une étape de compensation de délai de transfert d'information de phase du procédé de synchronisation en phase entre un noeud maître et un noeud esclave, selon l'invention ; et
- la figure 9 est un diagramme temporel de premières étapes au début de l'étape de compensation de délai de transfert d'information de phase, relatives à un saut de phase initial d'une référence de phase dans le noeud esclave.

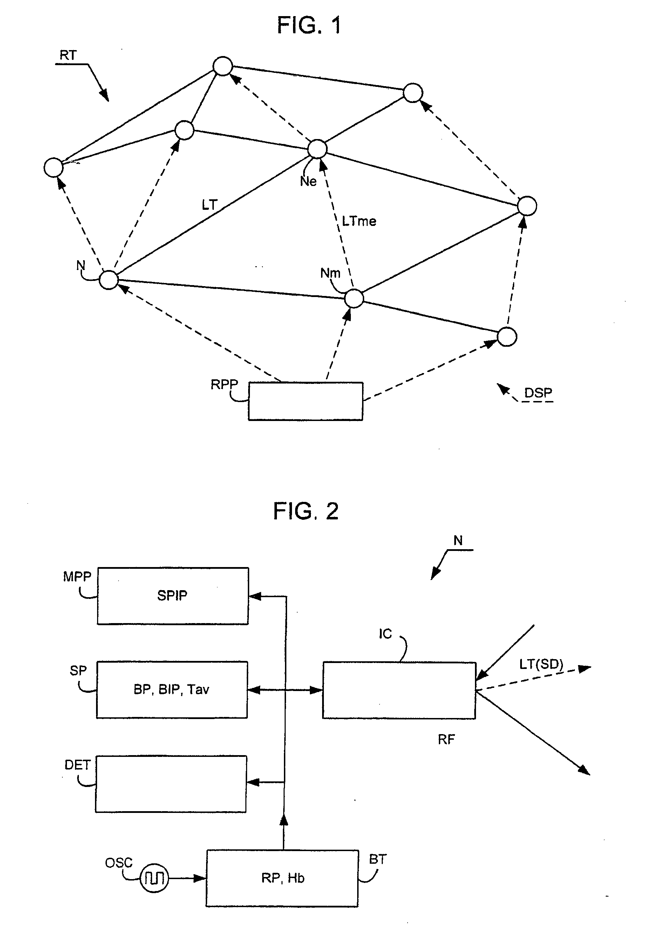

En référence à la figure 1, un réseau de télécommunications RT comprend des liens de transmission LT et des noeuds N. Un noeud peut-être un terminal fixe ou mobile ou un serveur, ou bien un équipement interne au réseau tel qu'une station de base, un contrôleur, un commutateur ou une tête de réseau. Un lien est par exemple une voie virtuelle de paquets ou de cellules sur un support tel qu'une liaison filaire ou radio. Par exemple, le réseau RT est un réseau de radiocommunications cellulaire numérique pour mobiles.

Comme montré schématiquement à la figure 2, un noeud N est seulement représenté par des blocs fonctionnels dont la plupart assurent des fonctions ayant un lien avec l'invention et peuvent correspondre à des modules logiciels implémentés dans un ou plusieurs processeurs et/ou à des modules matériels. Le noeud N comprend un détecteur DET, un synchroniseur de phase SP pour générer une information de phase sur une référence de phase interne au noeud N, un module de positionnement d'information de phase MPP pour signaler une position de l'information de phase à un autre noeud, une base de temps BT et une interface de communication IC desservant des liens de transmission LT dans le réseau RT.

La base de temps BT est associée à un oscillateur OSC commandé en tension et génère divers signaux d'horloge nécessaires au fonctionnement des blocs fonctionnels composant le noeud N. En particulier, un signal d'horloge Hb définit une période d'horloge Tb correspondant au débit d'un signal de données numérique SD à transmettre ou recevoir à travers au moins un lien LT auquel le noeud N est relié. Un autre signal d'horloge Hb définit une référence de phase interne périodique RP indiquée par une information de phase BP à transmettre à au moins un autre noeud. Par exemple la période d'horloge Tb est inférieure à la microseconde, et la référence de phase RP est sous la forme d'une impulsion à une période inférieure à la seconde, typiquement de l'ordre d'une à quelques millisecondes.

Dans la suite de la description, on se réfère à un signal de données SD qui est binaire et dont les bits constituent les éléments composant le signal SD. Il est entendu que tout élément connu autre qu'un bit peut être considéré comme composant le signal de données numérique, comme un digit ou un élément ternaire ou plus généralement un symbole à plusieurs états résultant en émission du traitement d'un signal de données binaire à transmettre, comme un codage et/ou une compression et/ou une modulation par exemple. Par conséquent le mot "bit" dans la suite de la présente description peut être remplacé par le mot "élément" d'un signal de données. Par exemple, le signal d'horloge Hb peut avoir la fréquence d'émission d'éléments de code dans un signal de données transmis dans un réseau à accès multiple à répartition par codes CDMA ("Code Division Multiple Access" en anglais).

Dans la suite de la description, les repères de référence précités relatifs à un noeud peuvent être suivis d'une minuscule "m" ou "e" pour désigner un élément inclus ou associé à un noeud dit "noeud maître" Nm ou à un noeud dit "noeud esclave" Ne.

En superposition au réseau de télécommunications, l'invention fournit un réseau de distribution de synchronisation en phase DSP qui est arborescent. Le réseau de distribution de la synchronisation en phase peut se superposer ou non au réseau de distribution de la synchronisation en fréquence. L'arbre correspondant au réseau de distribution DSP tracé en traits interrompus courts dans la figure 1 comporte une racine qui est un noeud contenant une référence primaire de phase RPP et des branches s'étendant depuis la racine et composées chacune d'un ensemble de lien de transmission LT.

Comme montré en traits pointillés à la figure 1, l'information de phase se propage itérativement de lien en lien de la racine vers les feuilles des branches dans le réseau de distribution de synchronisation en phase DSP. La propagation de la synchronisation en phase s'effectue selon un processus itératif entre chaque paire de noeuds du réseau DSP suivant le sens de la distribution de la synchronisation en phase depuis la racine.

Dans une paire de noeuds successifs connectés directement sans noeud intermédiaire, le noeud de la paire en amont suivant le sens de la distribution de la synchronisation en phase depuis la racine est un noeud maître Nm et l'autre noeud en aval est un noeud esclave Ne. Le noeud maître Nm est chargé de diffuser au noeud esclave Ne la synchronisation en phase, c'est-à-diré de mettre à jour une référence de phase RPe interne au noeud esclave Ne de façon régulière. Le noeud maître Nm agit donc localement comme une référence de phase RPm par rapport au noeud esclave Ne, bien qu'il tire lui-même sa synchronisation en phase d'un autre noeud, sauf si le noeud maître est la racine de l'arbre constituant la référence primaire de phase RPP. Le noeud esclave Ne peut agir comme un noeud maître vis-à-vis d'un noeud suivant en montant dans l'arbre vers une feuille, pour lui distribuer la synchronisation en phase qu'il a reçue. Inversement, en descendant dans l'arbre vers la racine, le noeud maître peut agir comme un noeud esclave vis-à-vis d'un noeud plus bas agissant comme un noeud maître.

L'invention suppose que le temps de transfert de l'information de phase entre les deux noeuds d'une paire, le noeud maître Nm et le noeud esclave Ne, présente des variations contenues dans des limites restreintes et est quasiment constant et identique dans le sens du lien LTme depuis le noeud maître Nm vers le noeud esclave Ne et dans le sens du lien LTem du noeud esclave Ne vers le noeud maître Nm. Les temps de transfert sont a priori différents pour différentes paires de noeuds considérées. Les liens LTme et LTem entre les noeuds Nm et Ne sont considérés ci-après comme ayant le même support physique.

La référence primaire de phase RP à la racine de l'arbre est un noeud maître et ne constitue pas un noeud esclave vis-à-vis d'aucun autre noeud. La référence primaire de phase peut correspondre à différents types d'équipement comme un récepteur GPS diffusant une phase en relation avec l'horloge de temps universel UTC, ou un générateur local de signal de phase doté d'une horloge de grande stabilité au césium. Les feuilles de l'arbre sont des noeuds esclaves, mais ne sont pas des noeuds maîtres vis-à-vis d'aucun autre noeud.

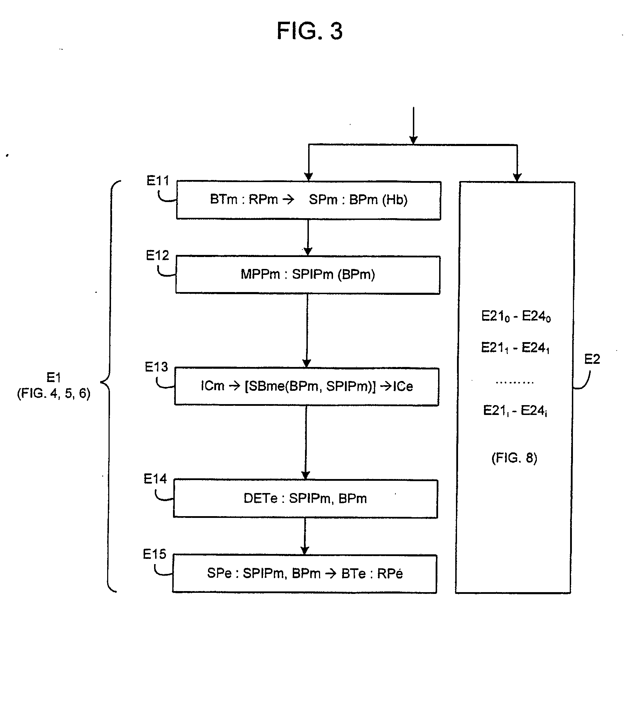

Comme montré à la figure 3, le procédé de synchronisation en phase selon l'invention pour une paire de noeuds Nm et Ne comprend une étape de transfert de phase E1 utilisant un lien de transmission LT du réseau RT reliant ces deux noeuds voisins, et une étape E2 de compensation du délai de transfert de l'information de phase dépendant de la propagation dans le lien de transmission LT. Les aspects du transfert de phase et les aspects de la compensation du délai de transfert sont imbriqués l'un dans l'autre. Pour cette raison, les étapes E1 et E2 sont représentées en parallèle dans la figure 3 et sont décrites ci-après séparément pour faciliter la compréhension du procédé de synchronisation en phase de l'invention.

L'étape de transfert de phase E1 comprend des étapes E11 à E15 également montrées à la figure 3.

A l'étape E11, le synchroniseur de phase SPm dans le noeud maître Nm surveille un signal d'horloge qui est fourni par la base de temps BTm et dont les impulsions marquent la périodicité TRP d'une référence de phase RPm interne au noeud maître Nm. La fréquence 1/TRP de la référence de phase RPm est bien inférieure à celle 1/Tb du signal d'horloge Hb correspondant au débit du signal de données binaire SDme à transmettre sur le lien LTme vers un noeud esclave Ne ou à recevoir du noeud esclave Ne à travers un lien LTem.

Des compteurs dans le synchroniseur de phase SPm comptent les périodes de bit Tb du signal d'horloge Hb entre deux instants consécutifs de la référence de phase RPm et cycliquement les références de phase RPm afin que le synchroniseur SPm génère une information de phase récurrente. La récurrence TMJ avec laquelle le synchroniseur de phase SPm contrôle l'information de phase BPm pour la transmettre en coordination avec la référence de phase RPm est précisée ultérieurement lors de la description de l'étape de compensation de délai de transfert E2. Par exemple, un tel contrôle est effectué une fois par seconde environ.

L'information de phase récurrente est par exemple un bit de phase BPm ayant une position déterminée dans le signal de données SD afin que le noeud maître Nm transfère cette information de phase représentative de sa référence de phase interne au noeud esclave Ne. Le bit de phase BPm peut être spécifique à l'information de phase, ou peut transporter une information de données utiles, comme on le verra ci-après selon trois réalisations.

A l'étape E12 dans le noeud maître Nm, le module de positionnement d'information de phase MPPm génère sous le contrôle du synchroniseur de phase SPm un signalement SPIPm de la position de chaque information de phase générée telle que le bit particulier BPm. Cette position indique au noeud esclave Ne la position de la référence de phase interne RPm par rapport aux bits du signal SD à émettre sur le lien de transmission LTem, avant tout traitement tel que codage et modulation dans l'interface de communication ICm.

A l'étape E13, l'interface de communication ICm du noeud maître Nm introduit selon sensiblement la même récurrence l'information de phase BPm et le signalement SPIPm de la position de celle-ci dans le signal de données SDme à transmettre dans le lien LTme vers le noeud esclave Ne.

A la réception du signal de données SDme, l'interface de communication ICe dans le noeud esclave Ne traite celui-ci pour l'appliquer au détecteur DETe. Le détecteur DETe est adapté à la structure des données dans le signal reçu SDme et peut par exemple détecter des bits, des mots tels que des octets, des paquets ou des champs de paquet prédéterminés, à l'étape E14. En l'espèce, le détecteur DETe détecte et extrait le signalement de position SPIPm et l'information de phase BPm dans le signal de données reçu SDme.

A l'étape E15, le synchroniseur de phase SPe du noeud esclave Ne synchronise en phase dans la base de temps BTe la référence de phase RPe interne au noeud esclave Ne avec l'information de phase BPm récupérée par le détecteur DETe en dépendance du signalement de position détecté SPIPm.

Comme déjà dit, les éléments inclus dans un noeud servent tantôt pour la fonction maître, tantôt pour la fonction esclave. Par exemple, les étapes E14 et E15 se déroulent dans le noeud Nm lorsqu'il est l'esclave d'un noeud maître situé en amont suivant le sens de la distribution de phase depuis la référence primaire de phase RPP dans le réseau de distribution de synchronisation en phase DSP montré à la figure 1; et les étapes E11 et E12 se déroulent dans le noeud Ne lorsqu'il est le maître d'un noeud esclave situé en aval suivant le sens de la distribution de phase dans le réseau DSP.

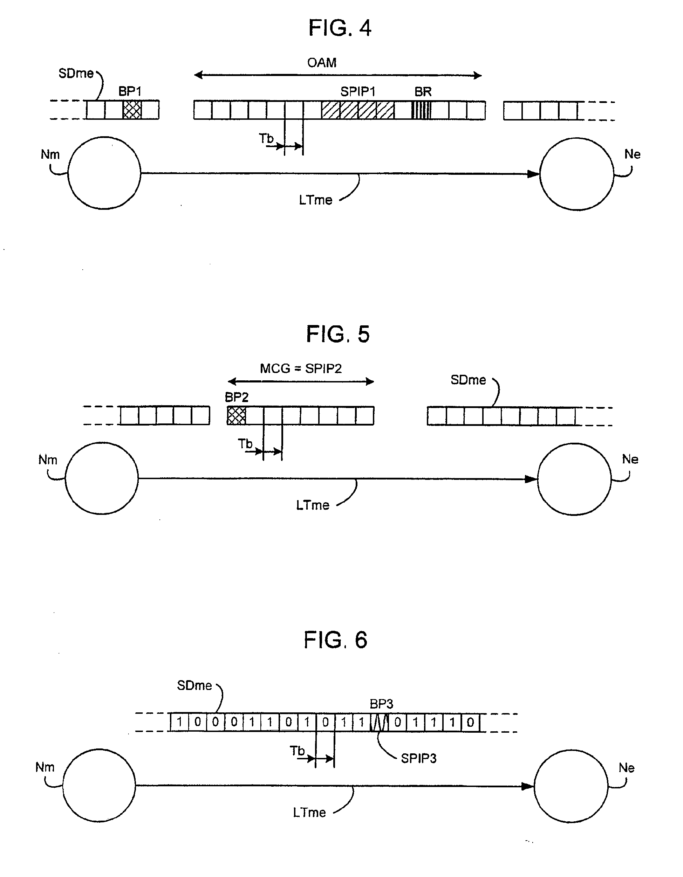

Selon une première réalisation montrée à la figure 4 relative à un réseau de télécommunications RT par paquets, par exemple un réseau Ethernet GbE, un paquet d'exploitation et de gestion OAM ("Operation And Management" en anglais) est utilisé pour transmettre le signalement SPIP1 de la position de l'information de phase BP1 depuis le noeud maître Nm vers le noeud esclave Ne. Les paquets OAM sont des paquets spécifiques de gestion transmis sur le lien LTme en l'absence du transfert de données. Le noeud Nm garantit que les paquets OAM sont transmis avec une récurrence minimale donnée, les données utiles étant retardées de temps en temps, si besoin est.

L'information de phase BP1 est un bit qui est inclus dans un paquet du signal de données SDme, ce paquet pouvant être un paquet OAM dédié notamment à la synchronisation de phase. Le paquet dédié comprend un bit de référence BR ayant un rang prédéterminé dans le paquet; par exemple le bit de référence est le dernier bit de l'en-tête du paquet.

Dans la première réalisation, il n'est pas indispensable de retarder l'émission du paquet de gestion OAM de façon à le transmettre "exactement" à l'instant de la référence de phase interne du noeud maître Nm. En d'autres termes, le bit de référence BR ayant un rang constant dans le paquet OAM ne correspond pas nécessairement à l'instant de phase auquel le bit de phase BP1 doit être émis sensiblement en phase avec la référence de phase RPm du noeud maître Nm. Puisque le nombre de bits dans le paquet de gestion OAM est relativement élevé, le signalement de position SPIP1 indiquant la position du bit de phase BP1 introduit à l'extérieur ou l'intérieur du paquet OAM sous le contrôle du synchroniseur SPm peut être codé sous la forme d'un mot, tel qu'un demi-octet ou un octet, ayant un emplacement fixe dans le paquet OAM. Le mot SPIP1 spécifie le nombre signé de bit succédant au ou précédant le bit de phase BP1 et séparant le bit de référence BR dans le paquet OAM du bit de phase BP1, ce nombre de bit étant égal ou supérieur à zéro. Puisque le bit de phase BP1 peut précéder le bit de référence BR ou le succéder, le nombre de bit séparant les bits BR et BP1 peut être signé. Par exemple dans la figure 4, le mot SPIP1 comprend 4 bits représentés par des carrés à hachures inclinées et signale que 15 bits séparent le bit de référence BR représenté par un carré à hachures verticales du bit de phase BP1 représenté par un carré à hachures croisées.

En complément, non seulement le signalement de position de l'information de position BP1 par rapport à un emplacement fixe dans le paquet OAM est codé dans le mot SPIP1, mais est également codée une information résiduelle spécifiant l'écart temporel, l'avance ou le retard réel exprimé en fraction de période de bit Tb du signal de données SD, entre le bit de phase BP1 dans le signal SDme transmis au noeud esclave Ne et l'instant réel de la référence de phase interne RPm du noeud maître Nm. En effet, parfois, le synchroniseur de phase SPm choisit le bit de phase BP1 dans le signal de données transmis SDme à une position qui ne correspond pas a priori exactement à l'instant réel de la référence de phase interne dans le noeud maître Nm. L'information résiduelle sur l'écart temporel entre le bit de phase BP1 et la référence de phase RPm accroît la granularité de l'information de phase BP1 transmise au delà de la période Tb du signal de données transmis, en compensant l'imprécision due au choix d'un bit de phase BP1 particulier pour l'instant de la référence de phase RPm. L'information résiduelle évite également l'accumulation d'avance ou de retard le long du réseau DSP.

Selon un exemple, un noeud Nm dans un réseau de paquets RT transmet un signal de données à 1,25 Gbit/s, soit une période de bit de 800 ps, et 300 paquets de gestion OAM par seconde. Un noeud Ne reçoit environ un paquet OAM toutes les 1000/300 = 0,003 s, soit toutes les $3.10^6$ ns. Si l'information de phase BP1 est transmise une fois par seconde, le nombre de transitions binaires maximum sur le lien LTme entre l'instant de la référence de phase RPe et l'arrivée du paquet OAM le plus proche de cet instant est de l'ordre de $(3000\ 10^6)/800 = 4.10^6$ transitions. Cette dernière

valeur est à coder dans le paquet OAM pour éviter de retarder la transmission de ce paquet.

Pour un signalement de position d'information de phase SPIPm codé par exemple en un mot à 3 octets offrant $16.10^6$ possibilités et en ajoutant 1 octet pour le codage de la valeur résiduelle sur l'écart temporel entre le bit de phase BP1 et la référence de phase RFm, ce qui correspond à une fraction du temps de bit Tb selon un découpage de chaque bit en 256 sous-intervalles, les 4 octets de codage prennent peu de place en comparaison avec le protocole de synchronisation en temps connu NTP par exemple nécessitant 3 estampilles de 8 octets par paquet, pour des tailles de paquet de 48 à 68 octets. De plus, l'information de phase n'est transmise selon l'invention qu'une seule fois par seconde, le reste des paquets OAM transmis ne transportent pas cette information.

En réduisant le nombre d'octets utilisés dans l'information SPIP1 pour donner la position du bit de phase BP1, on réduit aussi la taille de la fenêtre dans laquelle le paquet OAM doit être transmis.

Selon la première réalisation, les informations SPIP1 et BP1 peuvent être incluses dans un paquet OAM qui transporte un message de synchronisation SSM ("Status Synchronization Message" en anglais).

En variante, au lieu de transmettre une information résiduelle sur l'écart temporel entre le bit de phase BPm et la référence de phase interne RPm, le noeud Nm émettant un bit de phase BPm conserve en mémoire la valeur d'un écart temporel résiduel cumulé, cumulant des retards ou des avances, entre le bit de phase émis BPm et la référence de phase RPm interne au noeud Nm, pour que l'instant de référence de phase RPe dans le noeud esclave Ne soit mis exactement en phase avec l'instant de référence de phase RPm. Lorsque l'écart temporel résiduel cumulé mémorisé excède une période d'horloge entière Tb du signal de données binaire SDme à transmettre physiquement dans le lien de transmission LTme, alors le synchroniseur de phase SPm décale temporellement d'une période d'horloge Tb et donc d'un bit le bit de phase à transmettre vers le bit précédent du signal de données si une avance du bit de phase BPm doit être compensée par rapport à la référence de phase RPm, ou vers le bit suivant du signal binaire si un retard du bit de phase BPm doit être compensé par rapport à la référence de phase RPm. Le noeud Nm émettant le bit de phase ne communique pas l'erreur de phase résiduelle commise dans le noeud Nm au noeud Ne recevant le bit de phase, mais garde l'erreur de phase en mémoire pour la compenser lui-même de temps en temps. Cette variante évite aussi l'accumulation d'avance ou de retard le long du réseau de distribution de synchronisation en phase DSP. Une accumulation de retard ou d'avance peut être aussi évitée par un couplage entre synchronisation en phase et synchronisation en fréquence décrit plus loin.

Selon une deuxième réalisation montrée à la figure 5 relative à un réseau de télécommunications RT par paquets, par exemple un réseau Ethernet GbE avec un signal de données SDme à au moins 1 Gbit/s, des paquets de gestion spécifiques courts, appelés mots de code de gestion MCG, sont transmis sur le lien LTme en l'absence du transfert de données. Les mots de code de gestion MCG sont plus courts que les paquets de gestion OAM. Selon l'invention, le signalement de position SPIP2 indiquant la position de l'information de phase telle qu'un bit de phase BP2 est un mot de code de gestion MCG dédié à l'information de phase à transmettre. Le bit de phase BP2 est positionné à un rang prédéterminé, par exemple le dernier, dans le mot de code de gestion dédié MCG = SPIP2.

Le module de positionnement d'information de phase MPPm sous le contrôle du synchroniseur de phase SPm émet le mot de code de gestion dédié MCG = SPIP2 de façon à le retarder par rapport à la référence de phase RPm interne au noeud maître Nm, en imposant ainsi à l'émission du mot dédié un déphasage prédéterminé par rapport à la référence de phase RPm interne au premier noeud. Ce déphasage prédéterminé est destiné à faire coïncider le bit de phase BP2 comme repère de phase précisément avec la référence de phase RPm en tenant compte de la compensation du délai de transfert lorsque cela est possible, c'est-à-dire lorsqu'aucune donnée utile n'est en train d'être transmise. Le bit de phase BP2 n'est donc pas émis tout le temps, par exemple n'est pas émis toutes les secondes.

Selon une troisième réalisation montrée à la figure 6, l'information de phase est un bit de phase spécifique BP3 qui n'est à aucun des états binaires "0" et "1" des bits du signal de données SDme et qui contient une modulation spécifique d'un bit du signal binaire à transmettre. Cette modulation spécifique constitue en soi le signalement SPIP3 de la position du bit de phase BP3 dans le signal de données à transmettre. Le bit de phase est utilisé pour coder l'information de phase, afin de la distinguer des autres bits de données. Le synchroniseur de phase SPm génère le bit de phase au moment précis de la référence de phase RPm interne au noeud maître Nm en tenant compte de la compensation du délai de transfert lorsque cela est possible, c'est-à-dire lorsqu'aucune donnée utile n'est en train d'être transmise. Le bit de phase BP3 n'est donc pas émis tout le temps, par exemple n'est pas émis toutes les secondes.

Selon l'invention, il n'est pas indispensable a priori qu'un lien de transmission LTme apte à transmettre l'information de phase soit synchronisé en fréquence. Le lien LTme peut a priori être asynchrone et par conséquent les oscillateurs OSCm, OSCe des bases de temps BTm, BTe dans les noeuds peuvent avoir a priori des fréquences indépendantes. Les signaux d'horloge Hb relatifs à la transmission et la réception sur plusieurs liens LT liés à un noeud N peuvent être asynchrones. Le synchroniseur SPm dans le noeud maître Nm choisit comme bit de phase BPm à transmettre dans le lien LTme depuis le noeud maître le bit le plus proche de la référence de phase interne RPm du noeud maître Nm, en tenant compte de la compensation du temps de transfert entre le noeud maître Nm et le noeud esclave Ne, comme cela sera précisé par la suite.

Cependant, un couplage du procédé de synchronisation en phase selon l'invention avec une synchronisation en fréquence connue améliore les performances du procédé, en particulier entre les périodes de mise à jour de la phase du noeud esclave Ne. Entre deux mises à jour de la phase du noeud esclave Ne, la référence de phase interne RPe de celui-ci évolue au rythme de son oscillateur interne OSCe. Si les oscillateurs OSCm et OSCe génèrent des fréquences de bonne qualité, qui sont stables et qui ne présentent pas de biais de fréquence, alors le déphasage entre les références de phase RPm et RPe des noeuds maître et esclave entre deux mises à jour de la référence de phase RPe dans le noeud esclave Ne est limité. En conséquence, un couplage entre synchronisation en fréquence et synchronisation en phase permet d'effectuer des mises à jour de la phase du noeud esclave Ne moins fréquentes, tout en respectant l'exactitude souhaitée de l'information de phase au cours de sa transmission à travers des noeuds.

Pour éviter l'accumulation d'avance ou de retard de phase tout au long du réseau de distribution de synchronisation en phase DSP et ainsi affiner la granularité de l'information de phase transmise au delà de la période Tb du signal de données transmis sur la ligne, le synchroniseur de phase SP de chaque noeud N commande dans la base de temps BT du noeud N une modification sensible de la période d'horloge Tb et donc du débit des bits de données à transmettre dans un lien. La modification sensible de la période d'horloge Tb compense l'écart temporel, l'avance ou le retard réel, entre l'instant auquel devrait être transmis réellement le bit de phase BP par le noeud N, en tant que noeud Nm, et les instants de transmission des bits de données, et fait coïncider la référence de phase interne du noeud exactement sur un bit de données transmis. Typiquement le réglage de la période d'horloge Tb dans la base de temps BT est au plus d'une demi-période en avance ou retard au plus par période de transmission de l'information de phase BP, soit une variation très faible du débit par exemple au plus une fois par seconde. Le synchroniseur SP affine la granularité de l'information de phase transmise au delà de la période binaire Tb du signal de données transmis sur le lien.

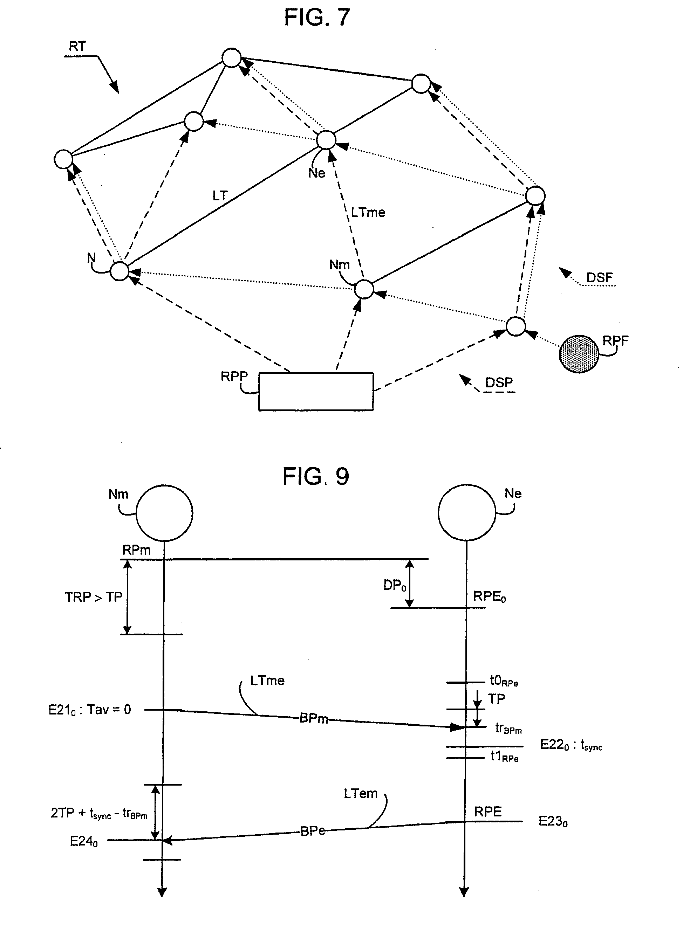

Selon une réalisation montrée à la figure 7, le réseau de distribution de synchronisation en phase DSP et un réseau de distribution de synchronisation en fréquence DSF utilisent la structure du réseau de télécommunications RT en parallèle. L'arbre correspondant au réseau DSF tracé en traits pointillés dans la figure 7 comporte une racine qui contient une référence primaire de fréquence RPF et qui est un noeud pouvant être distinct du noeud contenant la référence primaire de phase RPP, les réseaux DSP et DSF n'étant pas alors superposables. En variante, les références primaires de phase RPP et de fréquence RPF sont incluses dans un noeud commun, et/ou les réseaux DSP et DSF sont superposés. Lorsqu'un lien de transmission LT est utilisé à la fois comme lien synchronisant en fréquence et comme lien synchronisant en phase, le procédé de synchronisation en phase est amélioré. Le couplage entre les réseaux DSP et DSF fait bénéficier le réseau de distribution de synchronisation en phase DSP de mécanismes définis pour le réseau de distribution de synchronisation en fréquence, en les adaptant aux impératifs du réseau DSP.

Une certaine redondance au réseau de distribution de synchronisation en phase DSP est apportée en reliant un noeud esclave Ne à au moins deux noeuds maîtres Nm synchronisant en phase. En cas de défaillance du noeud maître principal ou du lien le reliant à ce noeud maître, le noeud esclave Ne utilise l'autre noeud maître en secours pour la synchronisation en phase. Le basculement d'un noeud maître vers un autre peut résulter dans le noeud esclave de l'analyse d'informations transmises sur la qualité des liens utilisés pour la synchronisation en phase, comme un nombre de noeuds traversés et la qualité de transmission du dernier lien traversé synchronisant en phase par exemple incluse dans un message de synchronisation SSM.

L'étape E2 compense le délai de transfert de l'information de phase BP entre les noeuds à travers les liens du réseau DSP puisque la réception de cette information de phase par un noeud esclave Ne n'est pas instantanée avec l'émission depuis un noeud maître Nm. L'instant d'émission de l'information de phase par le noeud maître Nm ne correspond pas à l'instant de réception de l'information de phase par le noeud esclave Ne à cause du temps de propagation entre les noeuds. Divers paramètres influencent le temps de propagation de l'information de phase comme la longueur du lien LTme entre les noeuds Nm et Ne et la température de l'environnement du lien. Le temps de propagation est prépondérant dans le délai de transfert et peut être considéré comme égal à celui-ci.

La compensation du délai de transfert à chaque noeud maître entre la racine et une feuille du réseau de distribution de synchronisation en phase DSP remédie à toute accumulation de retard de phase dans les noeuds traversés et ainsi confère une mise en phase sans biais de ces noeuds.

Pour compenser le délai de transfert de l'information de phase, l'invention décale en avance ou en retard chaque instant d'émission de l'information de phase interne dans un noeud maître Nm. Un dialogue de type "question-réponse" est instauré entre le noeud maître Nm et le noeud esclave Ne pour déterminer le délai de transfert. Chacun des deux noeuds est amené lors de ce dialogue à transmettre à l'autre noeud une information SPIPm, SPIPe sur la position de sa référence de phase interne RFm, RFe. Le noeud maître Nm est l'initiateur de ce dialogue, et avance l'émission de l'information de phase, telle que le bit de phase BPm, par rapport à sa référence de phase interne RFm pour compenser le délai de transfert. De manière symétrique en variante, le noeud esclave Ne est l'initiateur du dialogue et est chargé du décalage de l'émission de l'information de phase par rapport à sa référence de phase interne.

Dans la suite de la description, le temps de propagation depuis le noeud maître Nm vers le noeud esclave Ne et le temps de propagation en sens inverse depuis le noeud esclave Ne vers le noeud maître Nm sont considérés comme identiques et désignés par TP puisqu'ils se succèdent quasiment à la suite l'un de l'autre dans un laps de temps court. Toutefois, les délais de transfert pour différentes paires de noeuds dans le réseau RT sont a priori différents.

A cause du dialogue entre le noeud maître Nm et le noeud esclave Ne, les paquets incluant une information de phase et émis par un noeud contiennent une indication, tel qu'un bit particulier, indiquant le sens du transport de l'information de phase, selon qu'elle est du type maître et provient d'un noeud maître suivant la direction de la racine vers les feuilles de l'arbre du réseau DSP, ou qu'elle est du type esclave et provient d'un noeud esclave suivant la direction des feuilles vers la racine de l'arbre du réseau DSP. A l'aide de l'indication du sens du transport de l'information de phase donnant la provenance de l'information de phase, un noeud recevant une information de phase peut décider d'asservir sa référence de phase interne si l'information de phase provient d'un noeud maître Nm et ne doit pas l'asservir si l'information de phase provient d'un noeud esclave Ne.

Pour s'asservir sur un noeud maître Nm de façon dynamique, le noeud esclave Ne répond au noeud maître Nm en lui transmettant l'information de phase BPe relative à sa propre référence de phase interne RFe. Le noeud maître Nm sait alors qu'il a à présent un nouveau noeud esclave Ne asservi sur sa phase. L'asservissement dynamique de la phase du noeud esclave sur un noeud maître apporte une certaine redondance au réseau de distribution de synchronisation en phase, en permettant à un noeud esclave de changer de noeud maître en cas de dégradation de la phase reçue par le noeud esclave. Le procédé de synchronisation en phase ne crée aucune boucle directe de synchronisation en phase puisqu'un noeud maître Nm sait si l'un des noeuds voisins est asservi sur sa référence de phase RFm, puisque ce noeud voisin lui transmet une indication du sens du transport de l'information de phase BPe de type esclave, ou bien BPm de type maître.

Chaque noeud peut ainsi diffuser son information de phase en tant que noeud maître vers les autres noeuds qui l'utilisent ou non pour asservir leur référence de phase interne, excepté vers son propre noeud maître pour lequel ledit chaque noeud diffuse une information de phase BPe de type esclave.

Un noeud maître Nm doit maintenir actualisé un temps d'avance Tav pour chacun de ses noeuds esclaves Ne. Le temps d'avance Tav est le délai de transfert de l'information de phase depuis le noeud maître Nm vers le noeud esclave Ne considéré, et définit l'avance de laquelle le noeud maître Nm décale l'instant d'émission de l'information de phase constituée par le bit de phase BPm, transmise au noeud esclave Ne par rapport à la référence de phase interne RPm du noeud maître Nm, pour que le noeud esclave Ne reçoive le bit de phase BPm en phase avec la référence de phase interne RFm du noeud maître. Le noeud esclave Ne continue à envoyer un bit de phase BPe selon sa référence de phase interne RFe au noeud maître Nm sans décaler l'instant d'émission du bit BPe.

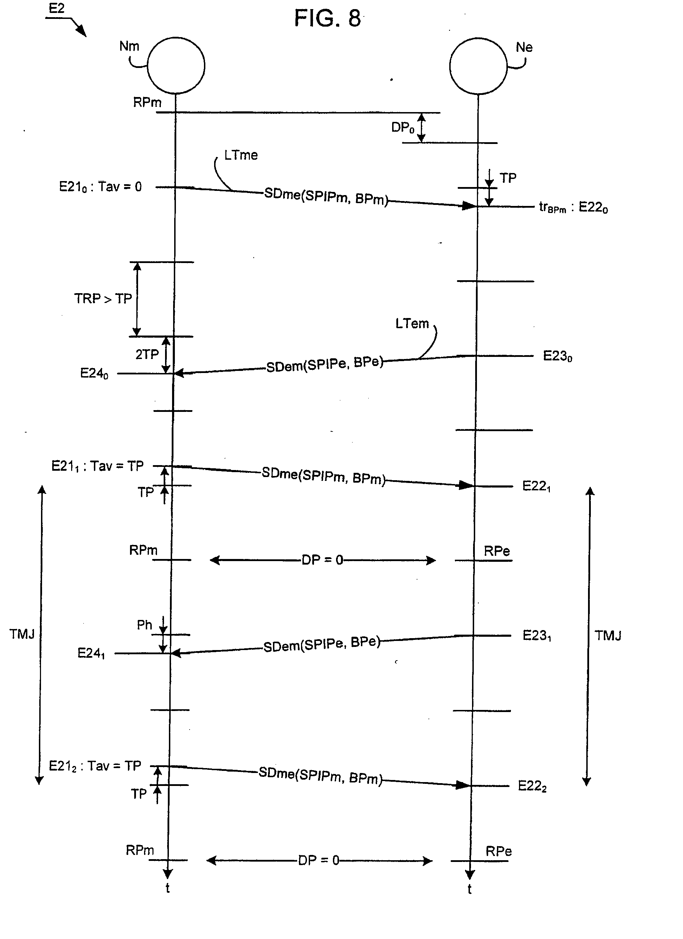

En référence à la figure 8, l'étape de compensation de délai de transfert d'information de phase E2 comprend un dialogue entre deux noeuds voisins Nm et Ne composé d'étapes initiales $E21_0$ à $E24_0$, puis d'étapes itératives $E21_i$ à $E24_i$, avec $i \geq 1$.

A l'étape initiale $E21_0$, lorsque le noeud Ne est un nouveau noeud esclave Ne qui doit s'asservir au noeud maître Nm, le synchroniseur de phase SPm du noeud maître Nm met à zéro le temps d'avance Tav. L'interface ICm transmet un bit de phase BPm introduit dans le signal de données SDme à l'instant de la référence de phase interne RPm du noeud maître Nm sur le lien de transmission LTme. La transmission du bit de phase BPm est accompagnée de la transmission du signalement de position SPIPm de la position de l'information de phase BPm par rapport aux bits du signal de données SDme transporté par le lien LTme, conformément aux étapes E12 et E13 selon l'invention.

A l'étape $E22_0$ dans le noeud esclave Ne, l'interface ICe reçoit le bit de phase BPm avec un retard TP. Le synchroniseur de phase SPe synchronise la référence de phase interne RPe dans la base de temps BTe du noeud esclave Ne sur l'instant de réception du bit de phase BPm, en dépendance du signalement de position SPIPm de la position de l'information de phase BPm détecté par le détecteur DETe. La référence de phase interne RPe est donc en retard de TP par rapport à celle RPm du noeud maître Nm.

A l'étape $E23_0$, l'interface ICe du noeud esclave Ne répond au noeud maître Nm en transmettant un bit de phase BPe en phase avec un instant ultérieur de la référence de phase synchronisée RPe sur le lien de transmission LTem. La transmission du bit de phase BPe n'intervient pas nécessairement à l'instant de référence de phase synchronisé du noeud esclave Ne suivant celui de la réception du bit de phase BPm. Le synchroniseur de phase SP du noeud esclave peut en effet attendre un instant de phase ultérieur, par exemple si l'interface de communication ICe dans le noeud esclave n'est pas prête pour l'envoi du bit de phase BPe tout de suite au premier instant de phase synchronisé RPe succédant à la réception du bit BFm. La transmission du bit de phase BPe est accompagnée de la transmission du signalement SPIPe de la position de l'information de phase BPe par rapport aux bits du signal de données SDem transporté par le lien LTem, par exécution des étapes E12 et E13 selon l'invention mais suivant le sens du noeud esclave Ne vers le noeud maître Nm.

A l'étape $E24_0$ dans le noeud maître Nm, l'interface ICm reçoit le bit de phase BPe du noeud esclave Ne en retard de 2 TP sur sa référence de phase interne RPm en considérant que le délai de transfert est identique dans les deux sens de transmission sur les liens LTme et LTem. Le détecteur DETm détecte la position du bit de phase BPe dans le signal SDem en fonction du signalement de position reçu SPIPe. Le synchroniseur de phase SPm déduit le délai de transfert TP à partir de la valeur Tav = 0 utilisée précédemment et du déphasage Ph entre le bit de phase reçu BPe et sa référence de phase interne RPm, soit :

$$(\texttt{Tav + Ph})/2 = (0 + 2 \texttt{ TP})/2 = \texttt{TP}.$$

La valeur Ph peut parfois être négative par exemple si la référence de phase interne RPe du noeud esclave est pour une raison quelconque trop en avance par rapport à la référence de phase interne RPm du noeud maître. Le noeud maître Nm met à jour le temps d'avance Tav de la façon suivante à partir de l'ancienne valeur de Tav :

$$\texttt{Tav} \equiv (\texttt{Ph + Tav})/\texttt{c} = (2 \texttt{ TP} + 0)/\texttt{c} = \texttt{TP, avec c} \geq 2.$$

Dans une réalisation simple, le coefficient c est égal à 2 afin de corriger immédiatement la référence de phase RPe du noeud esclave Ne pour la remettre en phase totalement avec la référence de phase RPm du noeud maitre et instantanément à l'étape E21$_1$ et aux étapes suivantes E21$_i$ des récurrences suivantes entre les noeuds Nm et Ne. Toutefois le coefficient c peut être un nombre décimal ou entier supérieur à 2 afin d'effectuer plus progressivement et moins brutalement la mise en phase du noeud esclave Ne, comme on le verra par la suite.

A l'étape E21$_1$, le synchroniseur de phase SPm commande à l'interface ICm la transmission d'un bit de phase BPm avec le signalement SPIPm de sa position généré par le module MPPm, dans le signal SDme sur le lien LTme, en avance de Tav = TP par rapport à la référence de phase interne RPm.

A l'étape E22$_1$ dans le noeud esclave Ne, l'interface ICe reçoit le bit de phase BPm avec un retard TP et le détecteur DETe détecte la position du bit de phase BPm dans le signal SDme en fonction du signalement de position reçu SPIPm. Le synchroniseur de phase SPe met à jour la référence de phase interne RPe en la synchronisant sur l'instant de réception du bit reçu BPm. La référence de phase interne RPe est désormais en phase avec la référence de phase interne RPm du noeud maître Nm.

A l'étape E23$_1$, le synchroniseur de phase SPe répond au noeuds maître Nm en commandant à nouveau l'interface ICe la transmission d'un bit de phase BPe en phase avec la nouvelle référence de phase RPe et d'un signalement SPIPe de la position de ce bit de phase BPe généré par le module MPPe, dans le signal SDem sur le lien de transmission LTem.

A l'étape E24$_1$ dans le noeud maître Nm, l'interface ICm reçoit le bit de phase BPe du noeud esclave Ne et le détecteur DETm détecte en fonction du signalement de position reçu SPIPe la position du bit de phase BPe en retard sur sa référence de phase interne RPm seulement de TP. Le synchroniseur de phase SPm met à jour le temps d'avance Tav :

$$\texttt{Tav} = (\texttt{Tav + Ph})/2 = (\texttt{Tav + TP})/2 = 2 \texttt{ TP}/2 = \texttt{TP}.$$

La valeur du temps d'avance Tav reste égale à TP puisque le délai de transfert n'a pas changé depuis l'envoi précédent d'un bit de phase BPm.

Puis l'étape de compensation de délai de transfert d'information de phase E2 est poursuivie par d'autres étapes itératives E21$_2$ à E24$_2$ et plus généralement par des étapes E21$_i$ à E24$_i$ identiques aux étapes précédentes E21$_1$ à E24$_1$. Au cours des étapes E21$_i$ à E24$_i$, des bits de phase BPm synchronisent en phase la référence de phase RPe du noeud esclave, des bits de phase BPe synchronisés en phase sont envoyés par le noeud esclave Ne et sont reçus avec un retard TP par le noeud maître Nm, et des bits de phase BPm sont transmis par le noeud maître avec une avance de TP par rapport à sa référence de phase interne RPm.

Grâce à la mise à jour systématique de la valeur du temps d'avance Tav dans le synchroniseur de phase SPm, toute variation du délai de propagation TP due par exemple à des variations de température dans les liens LTme et LTem est très rapidement compensée par le procédé. Entre les mises à jour de la référence de phase interne RPe du noeud esclave Ne aux étapes E22$_i$, la référence de phase interne RPe évolue au rythme de l'oscillateur OSCe interne au noeud esclave.

Les mises à jour itératives de la phase d'un noeud esclave Ne indiquées par des étapes E22$_i$ dans la figure 8 s'effectuent à une certaine période TMJ, par exemple au rythme d'une fois toutes les secondes, quand cela est possible. Selon la réalisation utilisée pour signaler l'information de phase telle que le bit de phase BP avec le signalement de position SPIP, il arrive que le bit de phase ne puisse pas être envoyé à chaque période de mise à jour TMJ par exemple si des données utiles sont transmises au même moment. Cependant selon la première réalisation, un envoi de bit de phase est toujours possible a priori en utilisant un paquet OAM et en indiquant par un signalement de position SPIP où se trouve la phase, même si le paquet n'a pas pu être émis strictement en phase.

Il n'est cependant pas nécessaire d'envoyer la phase à chaque fois, par exemple toutes les 4 références de phase RPm du noeud maître, soit TMJ = 4 TRP selon la figure 8, ou à des périodes plus grandes, par exemple toutes les secondes. Si le synchroniseur de phase SPe n'est pas capable de mettre en phase la référence de phase RPe à un instant donné selon le signal d'horloge binaire Hbe pour le lien LTem, la mise en phase est effectuée plus tard. La référence de phase interne RPe du noeud esclave Ne évolue alors en dépendance du rythme de l'oscillateur OSCe dans la base de temps BTe. L'exactitude visée de la référence de phase interne RPe dépend de la qualité du rythme de l'oscillateur OSCe interne au noeud esclave Ne et de la période de mise à jour de la référence de phase RPe dans le noeud esclave.

La période TRP de l'impulsion de référence de phase interne RP produite par les bases de temps BT dans les noeuds est très supérieure au délai de transfert TP de l'information de phase BP de façon à ne pas créer de confusion possible dans le calcul du délai de transfert TP. En effet, si la période TRP des références de phase internes RP des noeuds était du même ordre, voire même inférieure au délai de transfert TP de l'information de phase, une erreur serait produite dans la détermination du délai de transfert, égale à un certain nombre de fois la période TRP, puisque le synchroniseur de phase SPm du noeud maître Nm ne se référerait à tort qu'à la dernière impulsion de la référence de phase interne RPm précédant la réception du bit de phase BPe, et non à l'impulsion de la référence de phase interne RPm précédant un instant retardé du délai de transfert TP par rapport à l'émission du bit de phase BPe, pour déterminer le délai de transfert. Cette situation ne permet plus la mise en phase du noeud esclave Ne.

En prenant une période TRP de référence de phase interne dans les noeuds égale à une seconde environ, les inconvénients précités sont assurément évités puisque les délais de transfert TP dans les liens LT sont très inférieurs à la seconde.

Comme montré à la figure 8, le synchroniseur de phase SPm dans le noeud maître Nm détermine à nouveau et ajuste le temps d'avance Tav systématiquement à chaque réception d'un bit de phase BPe transmis par le noeud esclave Ne, en fonction du temps d'avance précédent Tav et du déphasage Ph entre le bit de phase reçu BPe et la référence de phase interne RPm, soit :

$$\texttt{Tav} \equiv \texttt{(Tav + Ph)/c, avec c} \geq \texttt{2.}$$

Afin de pas engendrer des perturbations sur le déroulement de certaines applications implémentées dans des noeuds esclaves et reposant sur la référence de phase, à cause d'une remise en phase totale aux étapes $E22_0$ et $E22_1$ par un saut brusque de la référence de phase interne RPe dans tout noeud esclave Ne, l'invention propose de remettre en phase le noeud esclave Ne progressivement plutôt que brusquement.

Une mise en phase progressive de la référence de phase RPe du noeud esclave Ne est introduite avec une valeur prédéterminée du coefficient c supérieure à 2. Le déphasage entre le noeud maître Nm et le noeud esclave Ne n'est pas alors instantanément compensé par l'avance du bit de phase BPm envoyé par le noeud maître Nm, mais se fait au fur et à mesure de plusieurs ensembles d'étapes d'échange itératives $E20_i$ à $E24_i$ entre les deux noeuds. Plus la valeur choisie pour le coefficient c est grande, c'est-à-dire plus les avances de la transmission $E21_i$ de l'information de phase générée BPm dépendant de fractions du délai de transfert TP par rapport à la référence de phase RPm sont petites, plus la mise en phase du noeud esclave Ne est recalée progressivement et lentement. De la même manière, le temps d'avance précédent Tav dans le noeud maître évolue de plus en plus lentement pour atteindre la valeur du temps de propagation TP.

Cependant, le coefficient c ne "lisse" qu'une proportion du déphasage initial $DP_0$ entre la référence de phase interne RPm du noeud maître Nm et celle RPe du noeud esclave Ne correspondant au délai de transfert à des étapes $E21_i$ et $E22_i$. Mais le coefficient c ne lisse pas le reste du déphasage qui est compensé immédiatement par le noeud esclave Ne à l'étape initiale $E22_0$, puisque le synchroniseur de phase SPe synchronise toujours la référence de phase RPe sur l'instant de réception du bit de phase BPm transmis par le noeud maître Nm. Malgré un coefficient c supérieur à 2, par exemple compris entre 5 et 15, ce comportement peut conduire à un saut de phase initial $DP_0$ de la référence de phase interne du noeud esclave Ne à l'étape initiale $E22_0$, comme montré à la figure 8.

Dans le noeud esclave comme montré la figure 9, pour éviter au moins le saut de phase initial $DP_0$ de la référence de phase interne RPe, le synchroniseur de phase SPe ne la synchronise plus directement sur l'instant de réception $tr_{BPm}$ du bit de phase BPm transmis par le noeud maître Nm à l'étape $E21_0$, mais attend légèrement après l'instant de réception $tr_{BPm}$ de façon à retarder la synchronisation de la référence de phase RPe d'un décalage temporel compris entre l'instant $t0_{RPe}$ et l'instant $t0_{RPe}$ de la prochaine référence de phase initiale $RPe_0$.

A l'étape $E22_0$ dans le noeud esclave Ne, le synchroniseur de phase SPe définit un coefficient d'amortissement d caractérisant le décalage temporel, avec $d \geq 1$. Par exemple le synchroniseur de phase SPe soustrait l'instant de réception $tr_{BPm}$ du bit de phase BPm au prochain instant $t1_{RPe}$ de la référence de phase initiale RPe, divise la différence obtenue par le coefficient d et retarde du quotient de la division la référence de phase initiale $RPe_0$ par rapport au prochain instant $t1_{RPe}$ de la référence de phase initiale RPe, de manière à déterminer l'instant suivant $t_{sync}$ sur lequel la nouvelle référence de phase RPe dans le noeud esclave Ne va être synchronisée, soit :

$$t_{sync} = t1_{RPe} - (t1_{RPe} - tr_{BPm})/d, \text{ avec } d \geq 1.$$

Le cas d = 1 est illustré à la figure 8 où la référence de phase interne RPe du noeud esclave Ne est synchronisée directement sur l'instant de réception $tr_{BPm}$ du bit de phase BPm ce qui conduit à un saut de phase $t1_{RPe} - tr_{BPm}$ puisque $t_{sync} = tr_{BPm}$. Plus le coefficient d est élevé, plus la convergence de la référence de phase RPe vers la référence de phase RPm est lente.

Au lieu que la différence $t1_{RPe} - tr_{BPm}$ soit positive, l'instant de phase peut être choisi comme précédant le temps de réception $tr_{BPm}$ du bit de phase BPm, si le retard du temps de réception $tr_{BPm}$ par rapport à l'instant de phase précédent $t0_{RPe}$ est inférieure à l'avance du temps de réception $tr_{BPm}$ par rapport à l'instant de phase suivant $t1_{RPe}$. Dans ce cas, la référence de phase interne du noeud esclave Ne est considérée comme étant en avance. La différence $t0_{RPe} - tr_{BPm}$ est alors négative, et le synchroniseur de phase SPe avance la référence de phase interne du noeud esclave Ne par rapport à l'instant de phase initiale correspondant $t0_{RPe}$ au lieu de la retarder.

A l'aide des deux coefficients c et d, la référence de phase interne du noeud esclave Ne est mis en phase progressivement avec celle du noeud maître Nm, en évitant tout saut de phase trop important.

En variante, pour pallier les inconvénients inhérents aux sauts de phase dans le noeud esclave Ne, seules les communications pour les informations de phase au cours du dialogue entre le noeud maître et le noeud esclave sont instantanément mises en phase dans le noeud esclave Ne, comme à la figure 8, soit c = 2 et d = 1. Mais le synchroniseur de phase SPe ne met pas instantanément la référence de phase interne RPe, et fait glisser progressivement la référence de phase RPe dans la base de temps BTe vers une mise en phase véritable avec la référence de phase interne RPm. Si le noeud esclave Ne est également un noeud maître pour d'autres noeuds esclaves dans le réseau de distribution de synchronisation en phase DSP, cette variante évite les sauts de phase brusques, et la remise en phase dans le noeud esclave Ne se fait en réalité progressivement, selon la souplesse souhaitée par l'application implémentée dans le noeud esclave Ne et utilisant la référence de phase RPe, indépendamment des remises en phase dans les autres noeuds du réseau.

L'invention décrite ici concerne un procédé pour la synchronisation en phase de noeuds, un noeud apte à synchroniser en phase un autre noeud et un noeud apte à être synchronisé en phase par un autre noeud dans un réseau de télécommunications. Selon une implémentation, les étapes du procédé de l'invention sont déterminées par les instructions de programmes d'ordinateur incorporés dans des processeurs des noeuds selon l'invention. Le programme dans un processeur comporte des instructions de programme qui, lorsque ledit programme est exécuté dans le processeur dont le fonctionnement est alors commandé par l'exécution du programme, réalisent des étapes du procédé selon l'invention.

En conséquence, l'invention s'applique également à un programme d'ordinateur, notamment un programme d'ordinateur enregistré sur ou dans un support d'enregistrement lisible par un ordinateur et tout dispositif de traitements de données, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter le procédé selon l'invention.

Le support d'enregistrement peut être n'importe quelle entité ou dispositif capable de stocker le programme. Par exemple, le support peut comporter un moyen de stockage sur lequel est enregistré le programme d'ordinateur selon l'invention, tel qu'une ROM, par exemple un CD ROM ou une ROM de circuit microélectronique, ou encore une clé USB, ou un moyen d'enregistrement magnétique, par exemple une disquette (floppy disc) ou un disque dur.

D'autre part, le support d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type internet.

Alternativement, le support d'enregistrement peut être un circuit intégré dans lequel le programme est incorporé, le circuit étant adapté pour exécuter ou pour être utilisé dans l'exécution du procédé selon l'invention.

**Revendications**

1. Procédé pour synchroniser en phase des noeuds (N) reliés par des liens (LT) d'un réseau de télécommunications (RT), **caractérisé en ce qu'**il comprend depuis un premier noeud (Nm) vers un deuxième noeud (Ne), un transfert (E1) d'une information de phase (BP) sensiblement en phase avec une référence de phase (RPm) interne au premier noeud et d'un signalement de position (SPIP) de l'information de phase par rapport à des éléments composants d'un signal de données (SD) transporté par un lien (LT) du réseau reliant le premier noeud au deuxième noeud.

2. Procédé conforme à la revendication 1, selon lequel le signalement de position généré est un nombre (SPIP1) d'élément composant entre l'information de phase générée (BP1) et un bit (BR) ayant un rang prédéterminé dans un paquet prédéterminé (OAM) incluant ledit nombre.

3. Procédé conforme à la revendication 1, selon lequel le signalement de position (SPIP2) est un mot de code de gestion (MCG) qui est généré avec un déphasage prédéterminé par rapport à la référence de phase (RPm) interne au premier noeud et dans lequel l'information de phase générée (BP2) est positionnée à un rang prédéterminé.

4. Procédé conforme à la revendication 1, selon lequel le signalement de position généré (SPIP3) est une modulation spécifique dans l'information de phase générée (BP3).

5. Procédé conforme à l'une quelconque des revendications 1 à 4, selon lequel le signalement de position (SPIP) généré et transféré est complété par une information résiduelle spécifiant un écart temporel entre l'information de phase générée (BP) et un instant de la référence de phase (RPm) interne au premier noeud (Nm), l'écart temporel étant inférieur à une période (Tb) des éléments composants du signal de données (SD).

6. Procédé conforme à l'une quelconque des revendications 1 à 4, comprenant dans le premier noeud (Nm) une mémorisation d'un écart temporel résiduel cumulé entre l'information de phase générée (BP) et la référence de phase (RPm) interne au premier noeud, et un décalage temporel de l'information de phase générée (BP) d'un élément composant dans le signal de données (SD) lorsque l'écart temporel résiduel cumulé mémorisé excède une période (Tb) des éléments composants du signal de données.

7. Procédé conforme à l'une quelconque des revendications 1 à 6, **caractérisé en ce qu'**il comprend en outre une compensation (E2) d'un délai de transfert (TP) de l'information de phase (BP) à travers le lien (LTme) reliant le premier noeud (Nm) au deuxième noeud (Ne).

8. Procédé conforme à la revendication 7, selon lequel la compensation du délai de transfert comprend les étapes itératives suivantes :

depuis le premier noeud (Nm) au deuxième noeud (Ne), une transmission (E21$_1$) de l'information de phase (BPm) dans le premier noeud (Nm) avec un décalage temporel (Tav) dépendant du délai de transfert (TP) par rapport à la référence de phase (RPm) interne au premier noeud et du signalement de position (SPIPm) de l'information de phase au deuxième noeud (Ne),
dans le deuxième noeud (Ne), une synchronisation (E22$_1$) d'une référence de phase (RPe) interne au deuxième noeud avec la réception de l'information de phase (BPm) transmise par le premier noeud et détectée en fonction du signalement de position,
une transmission (E23$_1$) depuis le deuxième noeud (Ne) vers le premier noeud (Nm) d'une information de phase (BPe) sensiblement en phase avec la référence de phase synchronisée (RPe) interne au deuxième noeud et d'un signalement de position (SPIPe) de l'information de phase par rapport aux éléments composants d'un signal de données (SDem) transporté par le lien (LTme) reliant le premier noeud au deuxième noeud (Ne), et à la réception de l'information de phase (BPe) dans le premier noeud (Nm), une mise à jour (E24$_1$) du décalage temporel par rapport à la référence de phase (RPm) interne au premier noeud en fonction du décalage temporel précédent et d'un déphasage (Ph) entre la référence de phase (RPm) interne au premier noeud et l'information de phase transmise (BPe) détectée en fonction du signalement de position transmis (SPIPe).

9. Procédé conforme à la revendication 8, selon lequel la référence de phase (RPe) du deuxième noeud (Ne) est mise en phase progressivement par des décalages temporels de la transmission (E21$_1$) de l'information de phase (BPm) générée dans le premier noeud (Nm) dépendant de fractions du délai de transfert (TP) par rapport à la référence de phase (RPm) interne au premier noeud.

10. Procédé conforme à la revendication 9 ou 11, selon lequel la référence de phase (RPe) du deuxième noeud (Ne) est mise en phase progressivement par une soustraction de l'instant de réception (tr$_{BPm}$) de l'information de phase (BPm) transmise par le premier noeud à un instant proche (t1$_{RPe}$) d'une référence de phase initiale (RPe$_0$) du deuxième noeud (Ne), une division de la différence obtenue par un coefficient supérieur à 1, et d'un déphasage (t$_{sync}$) de la référence de phase initiale du quotient de la division par rapport audit instant proche.

**11.** Noeud (Nm) apte à synchroniser en phase un autre noeud (Ne) et relié à celui-ci par un lien (LT) dans un réseau de télécommunications (RT), **caractérisé en ce qu'**il comprend un moyen (SPm, BTm, MPPm, ICm) pour transférer vers l'autre noeud (Ne) une information de phase (BPm) sensiblement en phase avec une référence de phase (RPm) interne au dit noeud et un signalement de position (SPIPm) de l'information de phase par rapport à des éléments composants d'un signal de données (SDme) transporté par le lien vers ledit autre noeud.

**12.** Noeud (Nm) conforme à la revendication 11, dans lequel le moyen pour transférer comprend :

un moyen (SPm) pour transmettre à l'autre noeud (Ne) l'information de phase (BPm) avec un décalage temporel (Tav) dépendant d'un délai de transfert (TP) de l'information de phase (BP) à travers le lien (LTme) par rapport à la référence de phase (RPm) interne au dit noeud et du signalement de position (SPIPm) de l'information de phase, et
un moyen pour mettre à jour (SPm, BTm) le décalage temporel par rapport à la référence de phase (RPm) interne audit noeud en fonction du décalage temporel précédent et d'un déphasage (Ph) entre la référence de phase (RPm) interne audit noeud et une information de phase (BPe) transmise par ledit autre noeud et détectée en fonction d'un signalement de position (SPIPe) transmis par ledit autre noeud, le signalement de position signalant la position de l'information de phase transmise par ledit autre noeud par rapport aux éléments composants d'un signal de données (SDem) transporté par ledit lien depuis ledit noeud vers ledit autre noeud.

**13.** Noeud (Ne) apte à être synchronisé en phase avec un autre noeud (Nm) et relié à celui-ci par un - lien (LT) dans un réseau de télécommunications (RT), **caractérisé en ce qu'**il comprend un moyen (ICe, SPe, BTe, MPPe) pour synchroniser en phase une référence de phase (RPe) avec la réception d'une information de phase (BPm) sensiblement en phase avec une référence de phase (RPm) transférée par ledit autre noeud (Nm) et détectée en fonction d'un signalement de position transféré (SPIP) de l'information de phase par rapport à des éléments composants d'un signal de données (SDme) transmis par ledit autre noeud sur le lien (LTme).

**14.** Noeud (Ne) conforme à la revendication 13, dans lequel le moyen pour synchroniser comprend un moyen (SPe, ICe) pour transmettre vers ledit autre noeud (Nm) une information de phase (BPe) sensiblement en phase avec la référence de phase synchronisée (RPe) interne audit noeud et un moyen (MPPe, ICe) pour transmettre un signalement de position (SPIPe) de l'information de phase à transmettre par rapport aux éléments composants d'un signal de données (SDem) transporté par le lien (LT) vers ledit autre noeud pour une mise à jour d'un décalage temporel de la transmission de l'information de phase (BPm) depuis ledit autre noeud par rapport à la référence de phase (RPm) interne audit noeud.

**15.** Programme d'ordinateur apte à être mis en oeuvre dans un noeud (Nm) apte à synchroniser en phase un autre noeud (Ne) et relié à celui-ci par un lien (LT) dans un réseau de télécommunications (RT), **caractérisé en ce qu'**il comprend des instructions qui, lorsque le programme est exécuté dans un processeur dudit noeud, réalisent des étapes conformes au procédé selon les revendications 1 à 10.

**16.** Programme d'ordinateur apte à être mis en oeuvre dans un noeud (Ne) apte à être synchronisé en phase avec un autre noeud (Nm) et relié à celui-ci par un lien (LT) dans un réseau de télécommunications (RT), **caractérisé en ce qu'**il comprend des instructions qui, lorsque le programme est exécuté dans un processeur dudit noeud, réalisent des étapes conformes au procédé selon les revendications 1 à 10.

**17.** Signal de données (SD) apte à être transporté par un lien (LT) entre deux noeuds (N) d'un réseau de télécommunications (RT) à synchroniser en phase, **caractérisé en ce qu'**il comprend une information de phase (BP) sensiblement en phase avec une référence de phase (RP) interne à l'un des noeuds, et un signalement de position (SPIP) de l'information de phase par rapport à des éléments composants du signal de données (SD).

**Patentansprüche**

**1.** Verfahren zur Phasensynchronisation der durch Links (LT) eines Telekommunikationsnetzes (RT) verbundenen Knoten (N), **dadurch gekennzeichnet, dass** es von einem ersten Knoten (Nm) zu einem zweiten Knoten (Ne) eine Übertragung (E1) einer Phaseninformation (BP) im Wesentlichen phasengleich mit einer Phasenreferenz (RPm) innerhalb des ersten Knotens und einer Positionsbeschreibung (SPIP) der Phaseninformation bezüglich von Bestandteilen eines Datensignals (SD) enthält, das von einem den ersten Knoten mit dem zweiten Knoten verbindenden Link (LT) des Netzes transportiert wird.

2. Verfahren nach Anspruch 1, gemäß dem die erzeugte Positionsbeschreibung eine Bestandteilszahl (SPIP1) zwischen der erzeugten Phaseninformation (BP1) und einem Bit (BR) ist, das einen vorbestimmten Rang in einem die Zahl enthaltenden vorbestimmten Paket (OAM) hat.

3. Verfahren nach Anspruch 1, gemäß dem die Positionsbeschreibung (SPIP2) ein Verwaltungscodewort (MCG) ist, das mit einer vorbestimmten Phasenverschiebung bezüglich der Phasenreferenz (RPm) innerhalb des ersten Knotens erzeugt wird, und wobei die erzeugte Phaseninformation (BP2) auf einem vorbestimmten Rang positioniert ist.

4. Verfahren nach Anspruch 1, gemäß dem die erzeugte Positionsbeschreibung (SPIP3) eine spezifische Modulation in der erzeugten Phaseninformation (BP3) ist.

5. Verfahren nach einem der Ansprüche 1 bis 4, gemäß dem die erzeugte und übertragene Positionsbeschreibung (SPIP) durch eine Restinformation vervollständigt wird, die eine zeitliche Abweichung zwischen der erzeugten Phaseninformation (BP) und einem Zeitpunkt der Phasenreferenz (RPm) innerhalb des ersten Knotens (Nm) spezifiziert, wobei die zeitliche Abweichung geringer als eine Periode (Tb) der Bestandteile des Datensignals (SD) ist.

6. Verfahren nach einem der Ansprüche 1 bis 4, das im ersten Knoten (Nm) eine Speicherung einer kumulierten zeitlichen Restabweichung zwischen der erzeugten Phaseninformation (BP) und der Phasenreferenz (RPm) innerhalb des ersten Knotens und eine zeitliche Verschiebung der erzeugten Phaseninformation (BP) eines Bestandteils im Datensignal (SD) enthält, wenn die gespeicherte kumulierte zeitliche Restabweichung eine Periode (Tb) der Bestandteile des Datensignals überschreitet.

7. Verfahren nach einem der Ansprüche 1 bis 6, **dadurch gekennzeichnet, dass** es außerdem eine Kompensation (E2) einer Übertragungszeit (TP) der Phaseninformation (BP) über den Link (LTme) enthält, der den ersten Knoten (Nm) mit dem zweiten Knoten (Ne) verbindet.

8. Verfahren nach Anspruch 7, gemäß dem die Kompensation der Übertragungszeit die folgenden iterativen Schritte enthält:

vom ersten Knoten (Nm) zum zweiten Knoten (Ne), eine Übertragung ($E21_1$) der Phaseninformation (BPm) im ersten Knoten (Nm) mit einer zeitlichen Verschiebung (Tav) abhängig von der Übertragungszeit (TP) bezüglich der Phasenreferenz (RPm) innerhalb des ersten Knotens und der Positionsbeschreibung (SPIPm) der Phaseninformation an den zweiten Knoten (Ne),
im zweiten Knoten (Ne), eine Synchronisation ($E22_1$) einer Phasenreferenz (RPe) innerhalb des zweiten Knotens mit dem Empfang der Phaseninformation (BPm), die vom ersten Knoten übertragen und abhängig von der Positionsbeschreibung erfasst wird,
eine Übertragung ($E23_1$) vom zweiten Knoten (Ne) zum ersten Knoten (Nm) einer Phaseninformation (BPe) im Wesentlichen phasengleich mit der synchronisierten Phasenreferenz (RPe) innerhalb des zweiten Knotens und einer Positionsbeschreibung (SPIPe) der Phaseninformation bezüglich der Bestandteile eines Datensignals (SDem), das von dem den ersten Knoten mit dem zweiten Knoten (Ne) verbindenden Link (LTme) transportiert wird, und
bei Empfang der Phaseninformation (BPe) im ersten Knoten (Nm), eine Aktualisierung ($E24_1$) der zeitlichen Verschiebung bezüglich der Phasenreferenz (RPm) innerhalb des ersten Knotens abhängig von der vorhergehenden zeitlichen Verschiebung und einer Phasenverschiebung (Ph) zwischen der Phasenreferenz (RPm) innerhalb des ersten Knotens und der erfassten übertragenen Phaseninformation (BPe) abhängig von der übertragenen Positionsbeschreibung (SPIPe).

9. Verfahren nach Anspruch 8, gemäß dem ein progressiver Phasenabgleich der Phasenreferenz (Rpe) des zweiten Knotens (Ne) durch zeitliche Verschiebungen der Übertragung ($E21_1$) der im ersten Knoten (Nm) erzeugten Phaseninformation (BPm) abhängig von Bruchteilen der Übertragungszeit (TP) bezüglich der Phasenreferenz (RPm) innerhalb des ersten Knotens durchgeführt wird.

10. Verfahren nach Anspruch 9 oder 11, gemäß dem ein progressiver Phasenabgleich der Phasenreferenz (RPe) des zweiten Knotens (Ne) durch eine Subtraktion des Empfangszeitpunkts ($tr_{BPm}$) der vom ersten Knoten übertragenen Phaseninformation (BPm) von einem nahen Zeitpunkt ($t1_{Rpe}$) einer ursprünglichen Phasenreferenz ($Rpe_0$) des zweiten Knotens (Ne), eine Division der erhaltenen Differenz durch einen Koeffizient größer als 1, und eine Phasenverschiebung ($t_{sync}$) der ursprünglichen Phasenreferenz vom Quotient der Division bezüglich des nahen Zeitpunkts durchgeführt wird.

11. Knoten (Nm), der einen anderen Knoten (Ne) phasensynchronisieren kann und mit diesem über einen Link (LT) in einem Telekommunikationsnetz (RT) verbunden ist, **dadurch gekennzeichnet, dass** er eine Einrichtung (SPm, BTm, MPPm, Icm) enthält, um zum anderen Knoten (Ne) eine Phaseninformation (BPm) im Wesentlichen phasengleich mit einer Phasenreferenz (RPm) innerhalb des Knotens und eine Positionsbeschreibung (SPIPm) der Phaseninformation bezüglich von Bestandteilen eines Datensignals (SDme) ·zu übertragen, das von dem Link zum anderen Knoten transportiert wird.

12. Knoten (Nm) nach Anspruch 11, wobei die Einrichtung zur Übertragung enthält:

eine Einrichtung (SPm) zur Übertragung zum anderen Knoten (Ne) der Phaseninformation (BPm) mit einer zeitlichen Verschiebung (Tav) abhängig von einer Übertragungszeit (TP) der Phaseninformation (BP) über den Link (LTme) bezüglich der Phasenreferenz (RPm) innerhalb des Knotens und der Positionsbeschreibung (SPIPm) der Phaseninformation, und
eine Einrichtung zur Aktualisierung (SPm, BTm) der zeitlichen Verschiebung bezüglich der Phasenreferenz (RPm) innerhalb des Knotens abhängig von der vorhergehenden zeitlichen Verschiebung und einer Phasenverschiebung (Ph) zwischen der Phasenreferenz (RPm) innerhalb des Knotens und einer vom anderen Knoten übertragenen und abhängig von einer vom anderen Knoten übertragenen Positionsbeschreibung (SPIPe) erfassten Phaseninformation (BPe), wobei die Positionsbeschreibung die Position der vom anderen Knoten übertragenen Phaseninformation bezüglich der Bestandteile eines Datensignals (SDem) beschreibt, das von dem Link von dem einen Knoten zum anderen Knoten transportiert wird.

13. Knoten (Ne), der mit einem anderen Knoten (Nm) phasensynchronisiert werden kann und mit diesem durch einen Link (LT) in einem Telekommunikationsnetz (RT) verbunden ist, **dadurch gekennzeichnet, dass** er eine Einrichtung (ICe, SPe, BTe, MPPe) enthält, um eine Phasenreferenz (RPe) mit dem Empfang einer Phaseninformation (BPm) im Wesentlichen phasengleich mit einer Phasenreferenz (RPm) in Phase zu synchronisieren, die von dem anderen Knoten (Nm) übertragen und abhängig von einer übertragenen Positionsbeschreibung (SPIP) der Phaseninformation bezüglich von Bestandteilen eines Datensignals (SDme) erfasst wird, das von dem anderen Knoten auf dem Link (LTme) übertragen wird.

14. Knoten (Ne) nach Anspruch 13, wobei die Einrichtung zur Synchronisation eine Einrichtung (SPe, ICe) zur Übertragung an den anderen Knoten (Nm) einer Phaseninformation (BPe) im Wesentlichen phasengleich mit der synchronisierten Phasenreferenz (RPe) innerhalb des Knotens und eine Einrichtung (MPPe, ICe) enthält, um eine Positionsbeschreibung (SPIPe) der zu übertragenden Phaseninformation bezüglich der Bestandteile eines vom Link (LT) zum anderen Knoten transportierten Datensignals (SDem) für eine Aktualisierung einer zeitlichen Verschiebung der Übertragung der Phaseninformation (BPm) von dem anderen Knoten bezüglich der Phasenreferenz (RPm) innerhalb des Knotens zu übertragen.

15. Computerprogramm, das in einem Knoten (Nm) durchgeführt werden kann, der einen anderen Knoten (Ne) phasensynchronisieren kann und mit diesem über einen Link (LT) in einem Telekommunikationsnetz (RT) verbunden ist, **dadurch gekennzeichnet, dass** es Anweisungen enthält, die, wenn das Programm in einem Prozessor des Knotens ausgeführt wird, Schritte gemäß dem Verfahren nach den Ansprüchen 1 bis 10 durchführen.

16. Computerprogramm, das in einem Knoten (Ne) durchgeführt werden kann, der mit einem anderen Knoten (Nm) phasensynchronisiert werden kann und mit diesem über einen Link (LT) in einem Telekommunikationsnetz (RT) verbunden ist, **dadurch gekennzeichnet, dass** es Anweisungen enthält, die, wenn das Programm in einem Prozessor des Knotens ausgeführt wird, Schritte gemäß dem Verfahren nach den Ansprüchen 1 bis 10 durchführen.

17. Datensignal (SD), das von einem Link (LT) zwischen zwei in Phase zu synchronisierenden Knoten (N) eines Telekommunikationsnetzes (RT) transportiert werden kann, **dadurch gekennzeichnet, dass** es eine Phaseninformation (BP) im Wesentlichen phasengleich mit einer Phasenreferenz (RP) innerhalb eines der Knoten und eine Positionsbeschreibung (SPIP) der Phaseninformation bezüglich von Bestandteilen des Datensignals (SD) enthält.

**Claims**

1. Method for phase-synchronizing nodes (N) connected by links (LT) of a telecommunications network (RT), **characterized in that** it comprises from a first node (Nm) to a second node (Ne), a transfer (E1) of a phase information item (BP) substantially in phase with a phase reference (RPm) internal to the first node and of a signalling of position (SPIP) of the phase information item with respect to component elements of a data signal (SD) transported by a link (LT) of the network connecting the first node to the second node.

2. Method in accordance with Claim 1, according to which the signalling of position generated is a number (SPIP1) of component element between the phase information item generated (BP1) and a bit (BR) having a predetermined rank in a predetermined packet (OAM) including said number.

3. Method in accordance with Claim 1, according to which the signalling of position (SPIP2) is a management code word (MCG) which is generated with a predetermined phase shift with respect to the phase reference (RPm) internal to the first node and in which the phase information item generated (BP2) is positioned at a predetermined rank.

4. Method in accordance with Claim 1, according to which the signalling of position generated (SPIP3) is a specific modulation in the phase information item generated (BP3).

5. Method in accordance with any one of Claims 1 to 4, according to which the signalling of position (SPIP) generated and transferred is supplemented with a residual information item specifying a temporal mismatch between the phase information item generated (BP) and an instant of the phase reference (RPm) internal to the first node (Nm), the temporal mismatch being less than a period (Tb) of the component elements of the data signal (SD).

6. Method in accordance with any one of Claims 1 to 4, comprising in the first node (Nm) a storage of an aggregate residual temporal mismatch between the phase information item generated (BP) and the phase reference (RPm) internal to the first node, and a temporal shift of the phase information item generated (BP) of a component element in the data signal (SD) when the aggregate residual temporal mismatch stored exceeds a period (Tb) of the component elements of the data signal.

7. Method in accordance with any one of Claims 1 to 6, **characterized in that** it furthermore comprises a compensation (E2) of a lag of transfer (TP) of the phase information item (BP) across the link (LTme) connecting the first node (Nm) to the second node (Ne).

8. Method in accordance with Claim 7, according to which the compensation of the transfer lag comprises the following iterative steps:

from the first node (Nm) to the second node (Ne), a transmission ($E21_1$) of the phase information item (BPm) in the first node (Nm) with a temporal shift (Tav) dependent on the transfer lag (TP) with respect to the phase reference (RPm) internal to the first node and of the signalling of position (SPIPm) of the phase information item to the second node (Ne),
in the second node (Ne), a synchronization ($E22_1$) of a phase reference (RPe) internal to the second node with the receipt of the phase information item (BPm) transmitted by the first node and detected as a function of the signalling of position,
a transmission ($E23_1$) from the second node (Ne) to the first node (Nm) of a phase information item (BPe) substantially in phase with the synchronized phase reference (RPe) internal to the second node and of a signalling of position (SPIPe) of the phase information item with respect to the component elements of a data signal (SDem) transported by the link (LTme) connecting the first node to the second node (Ne), and
on receipt of the phase information item (BPe) in the first node (Nm), an updating ($E24_1$) of the temporal shift with respect to the phase reference (RPm) internal to the first node as a function of the previous temporal shift and of a phase shift (Ph) between the phase reference (RPm) internal to the first node and the phase information item transmitted (BPe) detected as a function of the signalling of position transmitted (SPIPe).

9. Method in accordance with Claim 8, according to which the phase reference (RPe) of the second node (Ne) is placed in phase progressively by temporal shifts of the transmission ($E21_1$) of the phase information item (BPm) generated in the first node (Nm) dependent on fractions of the transfer lag (TP) with respect to the phase reference (RPm) internal to the first node.

10. Method in accordance with Claim 9 or 11, according to which the phase reference (RPe) of the second node (Ne) is placed in phase progressively by a subtraction of the instant of receipt ($tr_{BPm}$) of the phase information item (BPm) transmitted by the first node from a near instant ($t1_{RPe}$) close to an initial phase reference ($RPe_0$) of the second node (Ne), a division of the difference obtained by a coefficient greater than 1, and a phase shift ($t_{sync}$) of the initial phase reference of the quotient of the division with respect to said near instant.

11. Node (Nm) able to phase-synchronize another node (Ne) and connected to the latter by a link (LT) in a telecommunications network (RT), **characterized in that** it comprises a means (SPm, BTm, MPPm, ICm) for transferring to the other node (Ne) a phase information item (BPm) substantially in phase with a phase reference (RPm) internal to said node and a signalling of position (SPIPm) of the phase information item with respect to component elements of a data signal (SDme) transported by the link to said other node.

12. Node (Nm) in accordance with Claim 11, in which the means for transferring comprises:

a means (SPm) for transmitting to the other node (Ne) the phase information item (BPm) with a temporal shift (Tav) dependent on a lag of transfer (TP) of the phase information item (BP) across the link (LTme) with respect to the phase reference (RPm) internal to said node and of the signalling of position (SPIPm) of the phase information item, and
a means for updating (SPm, BTm) the temporal shift with respect to the phase reference (RPm) internal to said node as a function of the previous temporal shift and of a phase shift (Ph) between the phase reference (RPm) internal to said node and a phase information item (BPe) transmitted by said other node and detected as a function of a signalling of position (SPIPe) transmitted by said other node, the signalling of position signalling the position of the phase information item transmitted by said other node with respect to component elements of a data signal (SDem) transported by said link from said node to said other node.

13. Node (Ne) able to be phase-synchronized with another node (Nm) and connected to the latter by a link (LT) in a telecommunications network (RT), **characterized in that** it comprises a means (ICe, SPe, BTe, MPPe) for phase-synchronizing a phase reference (RPe) with the receipt of a phase information item (BPm) substantially in phase with a phase reference (RPm) transferred by said other node (Nm) and detected as a function of a transferred signalling of position (SPIP) of the phase information item with respect to component elements of a data signal (SDme) transmitted by said other node on the link (LTme).

14. Node (Ne) in accordance with Claim 13, in which the means for synchronizing comprises a means (SPe, ICe) for transmitting to said other node (Nm) a phase information item (BPe) substantially in phase with the synchronized phase reference (RPe) internal to said node and a means (MPPe, ICe) for transmitting a signalling of position (SPIPe) of the phase information item to be transmitted with respect to component elements of a data signal (SDem) transported by the link (LT) to said other node for an updating of a temporal shift of the transmission of the phase information item (BPm) from said other node with respect to the phase reference (RPm) internal to said node.

15. Computer program able to be implemented in a node (Nm) able to phase-synchronize another node (Ne) and connected to the latter by a link (LT) in a telecommunications network (RT), **characterized in that** it comprises instructions which, when the program is executed in a processor of said node, carry out steps in accordance with the method according to Claims 1 to 10.

16. Computer program able to be implemented in a node (Ne) able to be phase-synchronized with another node (Nm) and connected to the latter by a link (LT) in a telecommunications network (RT), **characterized in that** it comprises instructions which, when the program is executed in a processor of said node, carry out steps in accordance with the method according to Claims 1 to 10.

17. Data signal (SD) able to be transported by a link (LT) between two nodes (N) of a telecommunications network (RT) to be phase-synchronized, **characterized in that** it comprises a phase information item (BP) substantially in phase with a phase reference (RP) internal to one of the nodes, and a signalling of position (SPIP) of the phase information item with respect to component elements of the data signal (SD).

## FIG. 1

## FIG. 2

# FIG. 3

E11 — BTm : RPm → SPm : BPm (Hb)

E12 — MPPm : SPIPm (BPm)

E1 (FIG. 4, 5, 6)

E13 — ICm → [SBme(BPm, SPIPm)] → ICe

E14 — DETe : SPIPm, BPm

E15 — SPe : SPIPm, BPm → BTe : RPé

E21$_0$ - E24$_0$

E21$_1$ - E24$_1$

.........

E21$_i$ - E24$_i$

(FIG. 8)

E2

## FIG. 4

OAM

SDme

BP1        SPIP1    BR

Tb

Nm                                                       Ne

LTme

## FIG. 5

MCG = SPIP2

BP2                SDme

Tb

Nm                                                       Ne

LTme

## FIG. 6

SDme

BP3

| 1 | 0 | 0 | 0 | 1 | 1 | 0 | 1 | 0 | 1 | 1 | | 0 | 1 | 1 | 0 |

Tb            SPIP3

Nm                                                         Ne

LTme

## FIG. 7

RT

LT

Ne

LTme

N

Nm

DSF

RPP

RPF

DSP

## FIG. 9

Nm

Ne

RPm

$DP_0$

$TRP > TP$

$RPE_0$

$t0_{RPe}$

LTme

TP

$E21_0 : Tav = 0$

BPm

$tr_{BPm}$

$E22_0 : t_{sync}$

$t1_{RPe}$

LTem

$2TP + t_{sync} - tr_{BPm}$

RPE

$E23_0$

BPe

$E24_0$

## FIG. 8

E2

Nm

Ne

RPm

$DP_0$

TP

LTme

$E21_0 : Tav = 0$

SDme(SPIPm, BPm)

$tr_{BPm} : E22_0$

TRP > TP

2TP

LTem

$E23_0$

$E24_0$

SDem(SPIPe, BPe)

$E21_1 : Tav = TP$

SDme(SPIPm, BPm)

$E22_1$

TP

RPm

DP = 0

RPe

TMJ

Ph

$E24_1$

SDem(SPIPe, BPe)

$E23_1$

TMJ

$E21_2 : Tav = TP$

SDme(SPIPm, BPm)

$E22_2$

TP

RPm

DP = 0

RPe

t

t

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20030235216 A, Gustin

- US 20020018475 A, Ofek